# EUROPÄISCHE PATENTSCHRIFT

(11) **EP 1 222 049 B1**
(45) Veröffentlichungstag und Bekanntmachung des Hinweises auf die Patenterteilung: **17.11.2004**
(21) Anmeldenummer: 00964100.2
(22) Anmeldetag: 01.09.2000
(51) Int. Cl.: B23K 1/002, B23K 3/047, B23K 13/01, H05B 6/36

(54) **VERFAHREN UND VORRICHTUNG ZUR STIRNSEITIGEN FÜGETECHNISCHEN VERBINDUNG EINER TRÄGERMATRIX EINES WABENKÖRPERS**
METHOD AND DEVICE FOR JOINING A SUPPORT MATRIX OF A HONEYCOMB ON THE END FACE USING BONDING TECHNOLOGY
PROCEDE ET DISPOSITIF D'UNE LIAISON D'ASSEMBLAGE FRONTALE D'UNE MATRICE SUPPORT D'UN CORPS A NID D'ABEILLES

(30) Priorität: 14.09.1999 DE 19943976
(43) Veröffentlichungstag der Anmeldung: 17.07.2002
(73) Patentinhaber: Emitec Gesellschaft für Emissionstechnologie mbH, 53797 Lohmar (DE)
(72) Erfinder: SCHAPER, Katrin, 53842 Troisdorf (DE)
(74) Vertreter: Kahlhöfer, Hermann, Dipl.-Phys.
(86) Internationale Anmeldenummer: PCT/EP2000/008596
(87) Internationale Veröffentlichungsnummer: WO 2001/019561

(56) Entgegenhaltungen:
- EP-A- 0 245 737
- GB-A- 2 111 360
- US-A- 4 484 048
- US-A- 5 657 923
- PATENT ABSTRACTS OF JAPAN vol. 1996, no. 09, 30. September 1996 (1996-09-30) & JP 08 112668 A (USUI INTERNATL IND CO LTD), 7. Mai 1996 (1996-05-07)

## Beschreibung

Die vorliegende Erfindung betrifft ein Verfahren zur stimseitigen fügetechnischen Verbindung einer in einem Mantelrohr angeordneten aus zumindest teilweise strukturierten Blechfolien geschichteten und/oder gewickelten Trägermatrix eines Wabenkörpers, insbesondere Katalysatorträgerkörper, sowie eine Vorrichtung, insbesondere zur Durchführung des Verfahrens.

Bekannte Wabenkörper, insbesondere metallische Katalysatorträgerkörper, bestehen aus einer Trägermatrix mit beispielsweise spiralig aufgewickelten, sehr dünnwandigen, glatten und/oder gewellten Blechfolien, die in einem kreiszylindrischen oder auch ovalzylindrischen Mantelrohr fügetechnisch durch Schweißen, Löten, Sintern, Kleben oder dergleichen miteinander verbunden sind.

Zur Erhöhung der Widerstandfähigkeit eines solchen Wabenkörpers gegen thermische Wechselbelastungen ist bereits bekannt, lediglich in bestimmten Teilbereichen, beispielsweise stirnseitig, die Bleche der Trägermatrix fügetechnisch untereinander und ggf. mit dem Mantelrohr zu verbinden, so daß bei thermischer Belastung für Mantelrohr und Trägermatrix ungehinderte Dehnungsmöglichkeiten bestehen, wodurch plastische Wechselverformungen der Matrixzellen mit den Folgen von Zerstörung und Ablösung der Trägermatrix vermieden werden.

Klassische Verfahren zur stirnseitigen fügetechnischen Verbindung einer in einem Mantelrohr angeordneten aus zumindest teilweise strukturierten Blechfolien geschichteten und/oder gewickelten Trägermatrix eines Wabenkörpers, insbesondere Katalysatorträgerkörper, werden heutzutage insbesondere in einem einige Stunden andauernden diskontinuierlichen Prozeß im Hochtemperaturofen durchgeführt. Die einzelnen Wabenkörper werden dabei zu Chargen gesammelt in den Ofen gegeben. Zur Vermeidung von chemischen Reaktionen wie unerwünschter Kristallbildung oder Oxidation insbesondere an der Oberfläche der Blechfolien findet der fügetechnische Prozeß in einem Ofen unter einer beispielsweise Argon und/oder Wasserstoff enthaltenen Schutzgasatmosphäre oder im Vakuum statt und ist somit insbesondere mit einem recht hohen apparativen Aufwand und entsprechenden Kosten verbunden.

Ein Verfahren sowie eine Vorrichtung zur Herstellung metallischer Wabenkörper geht gattungsgemäß beispielsweise aus der JP-A-08 112 668 hervor. Dabei wird der Wabenkörper aus einem glatten und einem gewellten Band spiralig gewickelt und in ein Gehäuse eingesetzt. Dieser so gebildete Wabenkörper wird nun mit einem Lotmaterial versehen. Zur Wärmeeinbringung und zur Ausbildung von Verbindungen wird der Wabenkörper mit Induktions-Heizschlangen in Kontakt gebracht. Zur Anbindung der Metallbleche von der Stirnseite des Wabenkörpers her wird dem Wabenkörper eine Heizschlange gegenübergestellt. Die dort offenbarten Heizschlangen erzeugen eine relativ großflächige Erwärmung der Stirnseite, wobei in den mit Lot versehenen Bereichen fügetechnische Verbindungen ausgebildet werden.

Es ist die Aufgabe der vorliegenden Erfindung, ein verbessertes, insbesondere deutlich verkürztes, Verfahren zur stirnseitigen fügetechnischen Verbindung einer in einem Mantelrohr angeordneten aus zumindest teilweise strukturierten Blechfolien geschichteten und/oder gewickelten Trägermatrix eines Wabenkörpers, insbesondere Katalysatorträgerkörpers, anzugeben. Eine weitere Aufgabe ist, eine Vorrichtung, insbesondere zur Durchführung des Verfahrens, bereitzustellen.

Diese Aufgabe wird durch ein Verfahren mit den Merkmalen gemäß Anspruch 1 sowie durch eine Vorrichtung mit den Merkmalen gemäß Anspruch 9 gelöst. Zweckmäßige Weiterbildungen sind in den jeweils abhängigen Ansprüchen angegeben.

Die vorliegende Erfindung zur stirnseitigen fügetechnischen Verbindung einer in einem Mantelrohr angeordneten aus zumindest teilweise strukturierten Blechfolien geschichteten und/oder gewickelten Trägermatrix eines Wabenkörpers, insbesondere Katalysatorträgerkörper, macht insbesondere von dem Gedanken Gebrauch, wenigstens eine Stirnseite des Wabenkörpers mit Hilfe eines Induktionsspulen umfassenden Flächeninduktors, dessen Induktionsspulen entsprechend angeordnet sind, wenigstens teilweise so aufzuheizen, daß wenigstens stellenweise, insbesondere fleckenweise, Verbindungen der Blechfolien untereinander hergestellt werden. Der Flächeninduktor und/oder der Wabenkörper werden dabei relativ zueinander bewegt, insbesondere gedreht.

Wie beispielsweise in der EP 0 245 737 B1 erwähnt, ist die Nutzung induktiver Mittel für eine wenigstens teilweise fügetechnische Verbindung einer geschichteten und/oder gewickelten Trägermatrix eines Wabenkörpers bislang kaum in Betracht gezogen worden, da man annahm, daß im Gegensatz zum Mantelrohr sich die Wabenstruktur sowohl mittels Induktionsspulen als auch mit Wärmebestrahlung von außen insgesamt nur sehr schlecht aufheizen und auf eine für eine fügetechnische Verbindung ausreichende hohe Temperatur bringen lassen würde.

Überraschenderweise ermöglicht aber die vorliegende Erfindung in vorteilhafter Weise die sekundenschnelle fügetechnische Verbindung wenigstens einer Stimseite der Trägermatrix eines Wabenkörpers. Dabei kann im allgemeinen auf inertisierende Mittel verzichtet werden, da chemische Reaktionen, zumindest soweit es langsam ablaufende Gleichgewichtsreaktionen sind, aufgrund der extrem verkürzten Verbindungszeit nicht nachhaltig auftreten.

Insbesondere zur Anwendung der Erfindung bei der Herstellung besonders elastischer Katalysatorträgerkörper wird vorgeschlagen, daß die Verbindungsstellen an der Stirnseite des Wabenkörpers vorzugsweise örtlich gezielt und/oder hinsichtlich ihrer stirnseitigen Erstreckung variabel hergestellt werden können. Hierzu wird ein Flächeninduktor vorgeschlagen, welcher in vorteilhafter Weise hinsichtlich der Erzeugung von Verbindungsstellen und/oder Verbindungsflecken, also hinsichtlich seiner Wirkbereiche variierbar ist.

Insbesondere bei Kombination der Erfindung mit einer ggf. schon vorhandenen induktiven Vorrichtungen zur wenigstens teilweisen fügetechnischen Verbindung insbesondere der Enden von Blechfolien mit einem Mantelrohr wird vorgeschlagen, beispielsweise die Induktionsspulen so auszugestalten, daß die Stirnseite des Wabenkörpers so aufgeheizt werden, daß keine Verbindungen der Blechfolien zum Mantelrohr hergestellt werden.

Eine hierzu alternative Ausführungsform der Erfindung sieht vor, beispielsweise die Induktionsspulen wenigstens teilweise so auszugestalten, daß die Stirnseite des Wabenkörpers so aufgeheizt wird, daß zugleich Verbindungen der Blechfolien zum Mantelrohr hergestellt werden.

Gemäß einer weiteren Ausführungsform der Erfindung sind die Induktionsspulen vorzugsweise dergestalt ausgebildet, daß im wesentlichen die gesamte Stirnseite der Trägermatrix des Wabenkörpers, insbesondere gleichmäßig, aufheizbar ist.

Dieses Ziel kann beispielsweise auch dadurch erreicht und/oder unterstützt werden, daß der Flächeninduktor und/oder der Wabenkörper relativ zueinander bewegt, insbesondere gedreht, werden.

Alternativ oder kumulativ hierzu kann auch der Flächeninduktor entsprechend ausgebildet sein, vorzugsweise mit segmentierten Induktionsspulen oder als sogenannter Schneckeninduktor.

Versuche haben gezeigt, daß die Induktionsspulen einer erfindungsgemäßen Vorrichtung nicht mit einer hohen Wechselspannungsfrequenz von etwa 3 MHz betrieben werden müssen, wie dies nacht theoretischen Betrachtungen erwartet werden könnte, sondern daß in einer bevorzugten Ausführung schon eine deutlich geringere Wechselspannungsfrequenz von etwa 130 bis 170 kHz, insbesondere etwa 140 bis 160 kHz, vorzugsweise etwa 150 kHz ausreicht, genügend Energie in die Blechfolien einzubringen, mittels der die beispielsweise nachstehend bezeichneten fügetechnischen Verbindung herstellbar sind.

Die vorliegende Erfindung eignet sich insbesondere für fügetechnische Verbindungen wie Löten oder Sintern und kann in vorteilhafter Weise im laufenden Herstellungsprozeß von Katalysatorträgerkörpern angewandt werden ohne daß die kurzen Taktzeiten für die übrigen Herstellungsschritte für den Verbindungsvorgang überschritten werden.

Schließlich sei noch erwähnt, daß nicht nur die zuvor beschriebenen Merkmale untereinander, sondern auch mit bekannten fügetechnischen Verbindungstechniken kombinierbar sind. Insbesondere lassen sich die Vorteile der vorliegende Erfindung mit den Vorteilen der Herstellung von Katalysatorträgerkörpem unter einer Schutzgasatmosphäre oder einer anderen definierten Atmoshäre zur Oberflächenbehandlung verbinden, indem der Wabenkörper während des Verbindungsvorganges ganz oder teilweise unter Schutzgas gehalten wird.

Weitere Vorteile, Merkmale und Anwendungsmöglichkeiten der vorliegenden Erfindung werden nun anhand eines Ausführungsbeispieles eines Katalysatorträgerkörpers mit gegensinnig verschlungenen Metallblechfolien, auf welches die Erfindung jedoch nicht beschränkt ist, und unter Bezugnahme auf die Zeichnungen detailliert erläutert.

Es zeigen:
- Fig. 1: einen durch gegensinnige Verschlingung hergestellten Katalysatorträgerkörper in perspektivischer Ansicht;
- Fig. 2: den Katalysatorträgerkörper nach Fig. 1 mit einem Flächeninduktor in der Seitenansicht; und
- Fig. 3: den Flächeninduktor nach Fig. 2 in der Vorderansicht.

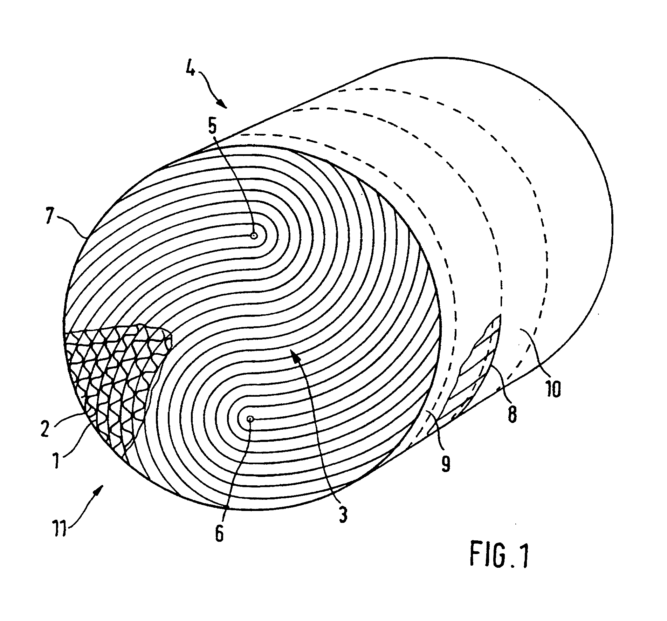

In Figur 1 zeigt schematisch eine aus abwechselnden Lagen glatten 1 und strukturierten, beispielsweise gewellten 2 Blechfolien geschichtete und gewickelte, im Ausführungsbeispiel um zwei Fixpunkte 5, 6 gegensinnig verschlungene, Trägermatrix 3 eines Wabenkörpers 4, insbesondere eines Katalysatorträgerkörpers. So verschlungene, in einem Mantelrohr 7 angeordnete Blechfolien 1, 2 sind lediglich in schmalen Verbindungsbereichen 9, beispielsweise stirnseitig, fügetechnisch untereinander und ggf. mit dem Mantelrohr 7 zu verbinden, sollen bei thermischer Belastung für Mantelrohr 7 und Trägermatrix 3 weitgehend ungehinderte Dehnungsmöglichkeiten bestehen sollen. Die Verbindung der Blechfolien 1, 2 mit dem Mantelrohr 7 kann aber auch in einem separaten, beispielsweise auf den Wabenkörper 4 bezogen mittig angeordneten schmalen Verbindungsbereich 10 erfolgen, wodurch für Trägermatrix 3 und Mantelrohr 7 ein verbessertes ungehindertes Dehnen für die zuerst mit heißem Abgas beaufschlagte Stirnseite 11 des Wabenkörpers 4 ermöglicht ist. Zur Verbesserung der dortigen Stabilität können die einzelnen Blechfolien 1, 2 nicht nur mit dem Mantelrohr 7, sondern in einem vorzugsweise ringförmigen Randzonenbereich 8 noch zusätzlich untereinander fügetechnisch verbunden sein. Auf diese Weise entsteht ein stabiles Gefüge auch dann, wenn einzelne Lagen aufgrund von Längenabweichungen das Mantelrohr 7 nicht berühren sollten. Grundsätzlich kann das nach dem Ausführungsbeispiel kreiszylindrisch ausgebildete Mantelrohr auch eine andere Form aufweisen, insbesondere ovalzylindrisch ausgebildet sein, und/oder aus mehreren Segmenten bestehen.

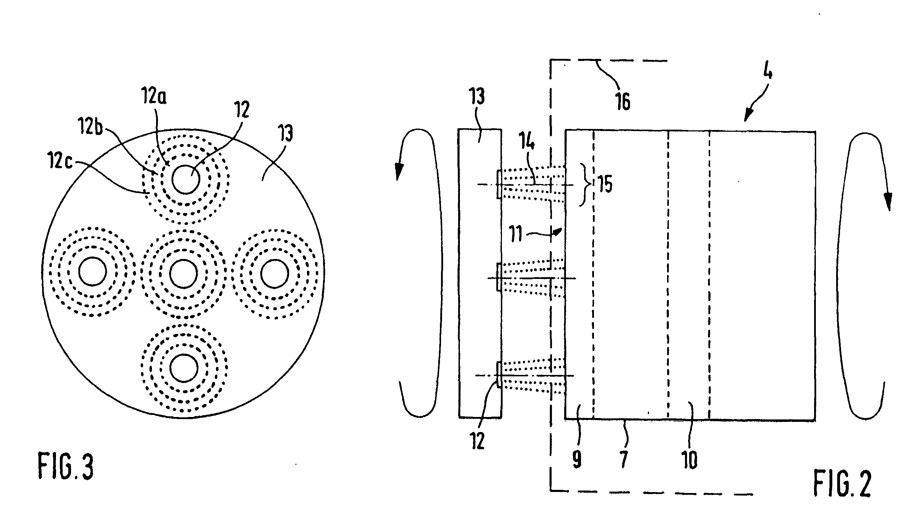

Die fügetechnische Verbindung an der Stirnseite 11 der im Mantelrohr 7 angeordneten aus zumindest teilweise strukturierten Blechfolien 1, 2 geschichteten und/oder gewickelten Trägermatrix 3 des Wabenkörpers 4, insbesondere Katalysatorträgerkörper, erfolgt, wie in den Figuren 2 und 3 schematisch dargestellt, erfindungsgemäß mit Hilfe eines Induktionsspulen 12 umfassenden Flächeninduktors 13, dessen Induktionsspulen 12 entsprechend angeordnet die Stirnseite 11 des Wabenkörpers 4 wenigstens teilweise so aufheizt, daß wenigstens stellenweise 14, insbesondere fleckenweise 15, Verbindungen der Blechfolien 1, 2 untereinander hergestellt werden.

Um ein möglichst breites Anwendungsspektrum der Erfindung, insbesondere die Herstellung unterschiedlichster Katalysatorträgerkörper sicherzustellen, sind die Verbindungsstellen 14 an der Stirnseite 11 des Wabenkörpers 4 vorzugsweise örtlich gezielt herstellbar. Bevorzugt weist jede Verbindungsstelle 14 vorzugsweise eine Fleckenform, also eine flächige Erstreckung, auf. Solche Verbindungsfekken 15 sind vorzugsweise hinsichtlich ihrer stirnseitigen Erstreckung variabel herstellbar. Hierzu wird ein Flächeninduktor 13 vorgeschlagen, welcher in vorteilhafter Weise hinsichtlich der Erzeugung von Verbindungsstellen 14 und/oder Verbindungsflecken 15, also hinsichtlich seiner Wirkbereiche 14, 15 variierbar ist. Dies läßt sich beispielsweise mittels in Fig. 3 schematisch dargestellten weiteren Induktionsspulensegmenten 12a, 12b, 12c erreichen, welche je nach gewünschter Größe des herzustellenden Verbindungsfleckens 15 hinzuschaltbar sind. Besonders vorteilhaft ist, wenn der Flächeninduktor insgesamt segmentförmig aufgebaut ist, um Verbindungen an beliebiger stirnseitiger Stelle des Wabenkörpers und mit beliebiger Flächenerstreckung herstellen zu können.

Die Induktionsspulen 12 des Flächeninduktors 13 nach dem Ausführungsbeispiel sind vorzugsweise so ausgestaltet, daß die Stirnseite 11 des Wabenkörpers 4 so aufgeheizt wird, daß die Blechfolien 1, 2 nicht mit dem Mantelrohr 7 verbunden werden, also ohne daß Verbindungen der Blechfolien 1, 2 zum Mantelrohr 7 hergestellt werden. Dies erlaubt in vorteilhafter Weise die fügetechnische Verbindung der Enden der Blechfolien 1, 2 an einer anderer Stelle mit dem Mantelrohr 7 als an der Stirnseite 11 des Wabenkörpers 4, insbesondere in einem mittleren Verbindungsbereich 10 des Wabenkörpers 4 mit dem Vorteil ungestörterer Dehnungsmöglichkeiten, wobei die Verbindung der Enden der Blechfolien 1, 2 mit dem Mantelrohr 7 insbesondere wiederum mit induktiven Mitteln oder auf andere Weise erfolgen kann.

Sollen die Enden der Blechfolien doch stimseitig mit dem Mantelrohr verbunden werden, so können bei wenigstens teilweiser entsprechender Ausgestaltung der Induktionsspulen des Flächeninduktors die Stirnseite des Wabenkörpers so aufgeheizt werden, daß zugleich Verbindungen der Blechfolien zum Mantelrohr herstellbar sind. Bevorzugt sind Flächeninduktoren, die am Rand wenigstens teilweise Induktionsspulen mit einer höheren Wechselspannungsfrequenz als im übrigen Bereich aufweisen.

Insbesondere bei Wabenkörpem 4 mit getrennten Verbindungsbereichen 9 und 10 wird zur Verbesserung der stirnseitigen Stabilität der Trägermatrix 3 des Wabenkörpers 4 vorgeschlagen, die Induktionsspulen 12 vorzugsweise dergestalt auszubilden, daß im wesentlichen die gesamte Stirnseite 11 der Trägermatrix 3 des Wabenkörpers 4, insbesondere gleichmäßig, aufheizbar ist. Dieses Ziel kann beispielsweise auch dadurch erreicht und/oder unterstützt werden, daß der Flächeninduktor 13 und/oder der Wabenkörper 4 relativ zueinander bewegt, insbesondere gedreht, werden, was in Fig. 2 durch Pfeile symbolisiert ist.

Alternativ oder kumulativ hierzu kann auch der Flächeninduktor entsprechend ausgebildet sein, neben dem schon erwähnten segmentförmigen Aufbau der Induktionsspulen beispielsweise als Schneckeninduktor.

Versuche haben gezeigt, daß die Induktionsspulen 12 einer erfindungsgemäßen Vorrichtung nicht mit einer hohen Wechselspannungsfrequenz von etwa 3 MHz betrieben werden müssen, so wie daß beispielsweise bei bekannten induktiv betriebenen Vorrichtungen zur fügetechnischen Verbindung der Enden von Blechfolien mit einem Mantelrohr der Fall ist, sondern daß in vorteilhafter Weise schon eine deutlich geringere Wechselspannungsfrequenz von etwa 130 bis 170 kHz, insbesondere etwa 140 bis 160 kHz, vorzugsweise etwa 150 kHz ausreicht, genügend Energie in die Blechfolien 1, 2 bzw. die Trägermatrix 3 einzubringen, mittels der die gewünschten Verbindungsstellen 14 bzw. Verbindungsflecken 15 herstellbar sind.

Schließlich sei noch darauf hingewiesen, daß anders als in Fig. 2 schematisch dargestellt, der Flächeninduktor 13 in Wirklichkeit nicht so weit von der Stirnseite 11 des Wabenkörpers 4, sondern vielmehr unmittelbar zu dieser benachbart angeordnet ist. Wie in Fig. 2 schematisch angedeutet können der Wabenkörper 4 oder die ganze Vorrichtung auch in einem Gehäuse 16 angeordnet sein, so daß eine Schutzgasatmosphäre während des Aufheizens hergestellt werden kann.

Die vorliegende Erfindung eignet sich insbesondere für fügetechnische Verbindungen wie Löten oder Sintern und kann in vorteilhafter Weise im laufenden Herstellungsprozeß von Katalysatorträgerkörpern angewandt werden.

### Bezugszeichenliste

- 1: glatte Blechfolie
- 2: strukturierte Blechfolie
- 3: Trägermatrix
- 4: Wabenkörper
- 5: Fixpunkt
- 6: Fixpunkt
- 7: Mantelrohr
- 8: Randzonenbereich
- 9: Verbindungsbereich
- 10: Verbindungsbereich
- 11: Stirnseite des Wabenkörpers 4
- 12: Induktionsspule
- 12a,b,c: Induktionsspulensegmente
- 13: Flächeninduktor
- 14: Verbindungsstelle
- 15: Verbindungsfleck
- 16: Gehäuse (für Schutzgas)

## Patentansprüche

1. Verfahren zur stirnseitigen fügetechnischen Verbindung einer in einem Mantelrohr (7) angeordneten aus zumindest teilweise strukturierten Blechfolien (1, 2) geschichteten und/oder gewickelten Trägermatrix (3) eines Wabenkörpers (4), insbesondere Katalysatorträgerkörper, bei dem wenigstens eine Stirnseite (11) des Wabenkörpers (4) mit Hilfe eines Induktionsspulen (12) umfassenden Flächeninduktors (13) wenigstens teilweise so aufgeheizt wird, daß wenigstens stellenweise (14),insbesondere Fleckenweise (15), Verbindungen der Blechfolien (1, 2) untereinander hergestellt werden, **dadurch gekennzeichnet, daß** der Flächeninduktor (13) und/oder der Wabenkörper (4) während des Heizvorgangs relativ zueinander bewegt, insbesondere gedreht, werden.

2. Verfahren nach Anspruch 1, bei dem die Verbindungsstellen (14) an der Stirnseite (11) des Wabenkörpers (4) örtlich gezielt und/oder hinsichtlich ihrer fleckenweisen (15) Erstreckung variabel hergestellt werden.

3. Verfahren nach Anspruch 1 oder 2, bei dem die Stirnseite (11) des Wabenkörpers (4) räumlich so aufgeheizt wird, daß Verbindungen der Blechfolien (1, 2) zum Mantelrohr (7) vermieden werden.

4. Verfahren nach Anspruch 1 oder 2, bei dem die Stirnseite (11) des Wabenkörpers (4) so aufgeheizt wird, daß zugleich Verbindungen der Blechfolien (1, 2) zum Mantelrohr (7) hergestellt werden.

5. Verfahren nach einem der vorherigen Ansprüche, bei dem im wesentlichen die gesamte Stirnseite (11) der Trägermatrix (3) des Wabenkörpers (4), vorzugsweise etwa gleichmäßig, aufgeheizt wird.

6. Verfahren nach einem der vorherigen Ansprüche, bei dem die Induktionsspulen (12) mit einer Wechselspannung, deren Frequenz etwa 130 bis 170 kHz, insbesondere etwa 140 bis 160 kHz, vorzugsweise etwa 150 kHz beträgt, betrieben werden.

7. Verfahren nach einem der vorherigen Ansprüche, bei dem die fügetechnische Verbindung durch Löten, Sintern oder dergleichen hergestellt wird.

8. Verfahren nach einem der vorhergehenden Ansprüche, **dadurch gekennzeichnet, daß** zumindest die zu erhitzenden Bereiche des Wabenkörpers während des Herstellens der fügetechnischen Verbindung unter Schutzgas gehalten werden.

9. Vorrichtung zur Durchführung des Verfahrens zur stirnseitigen fügetechnischen Verbindung einer in einem Mantelrohr (7) angeordneten aus zumindest teilweise strukturierten Blechfolien (1, 2) geschichteten und/oder gewickelten Trägermatrix (3) eines Wabenkörpers (4), beispielsweise Katalysatorträgerkörpers, nach einem der vorherigen Ansprüche, welche wenigstens mit einem Induktionsspulen (12) umfassenden Flächeninduktor (13) ausgeführt ist dessen Induktionsspulen (12) so angeordnet sind, daß wenigstens eine Stirnseite (11) des Wabenkörper (4) wenigstens teilweise so aufheizbar ist, daß wenigstens stellenweise, insbesondere fleckenweise, Verbindungen der Blechfolien (1, 2) untereinander herstellbar sind, **dadurch gekennzeichnet, daß** die Induktionsspulen mehrere Induktionsspulensegmente (12a, 12b, 12c) aufweisen, die hinrzuschaltbar sind.

10. Vorrichtung nach Anspruch 9, **dadurch gekennzeichnet, daß** der Flächeninduktor (13) hinsichtlich seiner Wirkbereiche (14, 15) einstellbar ist.

11. Vorrichtung nach Anspruch 9 oder 10, **dadurch gekennzeichnet, daß** die Vorrichtung Mittel (16) zur Erzeugung einer Schutzgasatmosphäre aufweist, insbesondere ein elektrisch nicht leitendes Gehäuse, so daß der Wabenkörper (4) ganz oder teilweise während des Herstellens der fügetechnischen Verbindung unter Schutzgas gehalten ist.

## Claims

1. A method for the end-face connection of a support matrix (3) of a honeycomb body (4) by means of a joining technique, in particular a catalyst support body, said matrix being arranged in a tubular jacket (7) and being laminated and/or wound from at least partially structured sheet metal foils (1, 2), in which at least one end face (11) of the honeycomb body (4) is at least partially heated up with the aid of a surface inductor (13) comprising induction coils (12) in such a way that connections of the sheet metal foils (1, 2) to one another are established at least at certain locations (14), in particular at certain spots (15), **characterized in that** the surface inductor (13) and/or the honeycomb body (4) are moved in relation to each other during the heating process, in particular rotated.

2. The method as claimed in claim 1, in which the connecting locations (14) on the end face (11) of the honeycomb body (4) are established in a locally selective way and/or variably with regard to their extent over certain spots (15).

3. The method as claimed in claim 1 or 2, in which the end face (11) of the honeycomb body (4) is heated up spatially in such a way that connections of the sheet metal foils (1, 2) with respect to the tubular jacket (7) are avoided.

4. The method as claimed in claim 1 or 2, in which the end face (11) of the honeycomb body (4) is heated up in such a way that connections of the sheet metal foils (1, 2) with respect to the tubular jacket (7) are at the same time established.

5. The method as claimed in one of the preceding claims, in which essentially the entire end face (11) of the support matrix (3) of the honeycomb body (4) is heated up, preferably approximately uniformly.

6. The method as claimed in one of the preceding claims, in which the induction coils (12) are operated with an AC voltage the frequency of which is approximately 130 to 170 kHz, in particular approximately 140 to 160 kHz, preferably approximately 150 kHz.

7. The method as claimed in one of the preceding claims, in which the connection by means of a joining technique is established by brazing, sintering or the like.

8. The method as claimed in one of the preceding claims, **characterized in that** at least the regions of the honeycomb body to be heated are kept under inert gas while the connection by means of a joining technique is being established.

9. An apparatus for carrying out the method for the end-face connection of a support matrix (3) of a honeycomb body (4) by means of a joining technique, for example a catalyst support body, said matrix being arranged in a tubular jacket (7) and being laminated and/or wound from at least partially structured sheet metal foils (1, 2), as claimed in one of the preceding claims, said apparatus comprising at least a surface inductor (13) comprising induction coils (12), the induction coils (12) of which are arranged such that at least one end face (11) of the honeycomb body (4) can be at least partially heated up in such a way that connections of the sheet metal foils (1, 2) to one another can be established at least at certain locations, in particular at certain spots, **characterized in that** the induction coils comprise a plurality of induction coil segments (123a, 12b, 12c), said induction coil segemts being actuatable.

10. The apparatus as claimed in claim 9, **characterized in that** the surface inductor (13) is adjustable with regard to is effective regions (14, 15).

11. The apparatus as claimed in claim 9 or 10, **characterized in that** the apparatus has means (16) for the generation of an inert gas atmosphere, in particular an electrically nonconducting housing, so that the honeycomb body (4) is kept under inert gas entirely or partially while the connection by means of a joining technique is being established.

## Revendications

1. Procédé pour la liaison frontale par technique de jointoiement d'une matrice support (3) d'un corps en nids d'abeilles (4), notamment un corps support de catalyseur, laquelle matrice est agencée dans un tube d'enveloppe (7) et empilée et/ou enroulée de feuilles de tôle (1, 2) au moins partiellement structurées, dans lequel au moins une face frontale (11) du corps en nids d'abeilles (4) est réchauffée au moins partiellement de telle manière à l'aide d'un inducteur de surface (13) comprenant des bobines d'induction (12) qu'au moins par endroits (14), notamment par taches (15), des liaisons des feuilles de tôle (1, 2) entre elles sont établies, **caractérisé en ce que** durant le processus de chauffage l'inducteur de surface (13) et/ou le corps en nids d'abeilles (4) sont déplacés relativement l'un par rapport à l'autre, notamment tournés.

2. Procédé selon la revendication 1, dans lequel les endroits de liaison (14) sur la face frontale (11) du corps en nids d'abeilles (4) sont établis localement de manière sélective et/ou quant à leur étendue par taches (15) de manière variable.

3. Procédé selon la revendication 1 ou 2, dans lequel la face frontale (11) du corps en nids d'abeilles (4) est réchauffée spatialement de telle manière que des liaisons des feuilles de tôle (1, 2) avec le tube d'enveloppe (7) sont évitées.

4. Procédé selon la revendication 1 ou 2, dans lequel la face frontale (11) du corps en nids d'abeilles (4) est réchauffée de telle manière que des liaisons des feuilles de tôle (1, 2) avec le tube d'enveloppe (7) sont établies en même temps.

5. Procédé selon l'une des revendications précédentes, dans lequel essentiellement la face frontale (11) entière de la matrice support (3) du corps en nids d'abeilles (4) est réchauffée, de préférence environ uniformément.

6. Procédé selon l'une des revendications précédentes, dans lequel les bobines d'induction (12) sont opérées avec une tension alternée dont la fréquence comporte environ 130 à 170 kHz, notamment environ 140 à 160 kHz, de préférence environ 150 kHz.

7. Procédé selon l'une des revendications précédentes, dans lequel la liaison par technique de jointoiement est établie par brasage, frittage etc..

8. Procédé selon l'une des revendications précédentes, **caractérisé en ce qu'**au moins les régions du corps en nids d'abeilles devant être chauffées sont maintenues sous gaz de protection durant la fabrication de la liaison par technique de jointoiement.

9. Dispositif pour l'exécution du procédé pour la liaison frontale par technique de jointoiement d'une matrice support(3) d'un corps en nids d'abeilles (4), par exemple un corps support de catalyseur, laquelle matrice est agencée dans un tube d'enveloppe (7) et empilée et/ou enroulée de feuilles de tôle (1, 2) au moins partiellement structurées, selon l'une des revendications précédentes, lequel dispositif est réalisé avec au moins un inducteur de surface (13) comprenant des bobines d'induction (12), dont les bobines d'induction (12) sont agencées de telle façon qu'au moins une face frontale (11) du corps en nids d'abeilles (4) peut être réchauffée au moins partiellement de telle manière qu'au moins par endroits, notamment par taches, des liaisons des feuilles de tôle (1, 2) entre elles sont établies, **caractérisé en ce que** les bobines d'induction ont une pluralité de segments de bobines d'induction (12a, 12b, 12c), qui peuvent être actionnés.

10. Dispositif selon la revendication 9, **caractérisé en ce que** l'inducteur de surface (13) est ajustable quant à ses régions effectives (14, 15).

11. Dispositif selon la revendication 9 ou 10, **caractérisé en ce que** le dispositif a des moyens (16) pour générer une atmosphère contrôlée, notamment un boîtier qui n'est pas électroconducteur, de sorte que durant la fabrication de la liaison par technique de jointoiement le corps en nids d'abeilles (4) est maintenu entièrement ou partiellement sous gaz de protection.
